Europäisches Patentamt

European Patent Office

Office européen des brevets

(11) Veröffentlichungsnummer: **0 249 001**
**B1**

(12) # EUROPÄISCHE PATENTSCHRIFT

(45) Veröffentlichungstag der Patentschrift:
**31.01.90**

(21) Anmeldenummer: **87105344.3**

(22) Anmeldetag: **10.04.87**

(51) Int. Cl.⁴: **B60K 17/28, F16H 47/04**

(54) **Instationär betriebenes Nutzfahrzeug mit über eine Arbeitshydraulik betätigbaren Nutzeinrichtungen.**

(30) Priorität: **11.06.86 DE 3619640**

(43) Veröffentlichungstag der Anmeldung:
**16.12.87 Patentblatt 87/51**

(45) Bekanntmachung des Hinweises auf die Patenterteilung:
**31.01.90 Patentblatt 90/5**

(84) Benannte Vertragsstaaten:
**CH DE FR LI SE**

(56) Entgegenhaltungen:
**EP-A- 0 140 046**
**DE-A- 2 454 450**
**DE-A- 2 749 771**
**DE-A- 2 904 572**

(73) Patentinhaber: **MAN Nutzfahrzeuge Aktiengesellschaft,
Dachauer Strasse 667 Postfach 50 06 20,
D-8000 München 50(DE)**

(72) Erfinder: **Hagin, Faust, Poccistrasse 2,
D-8000 München 2(DE)**
Erfinder: **Drewitz, Hans, Agnesstrasse 59/III,
D-8000 München 40(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein stark instationär betriebenes Nutzfahrzeug mit über eine Arbeitshydraulik betätigbaren Nutzeinrichtungen, mit gattungsgemäßen Merkmalen entsprechend dem Oberbegriff des Anspruches 1.

Die Erfindung basiert auf einem Nutzfahrzeug mit einer Antriebseinrichtung, die aus der DE-A 2 904 572 bekannt ist und auf den gleichen Erfinder zurückgeht. Dort ist über die Ansteuerung und den Betrieb von über eine Arbeitshydraulik betätigbaren Nutzeinrichtungen jedoch nichts ausgesagt.

Über den möglichen Betrieb solcher Nutzeinrichtungen, insbesondere in einem Müllsammelfahrzeug, gibt dagegen die EP-AI 0 140 046 Auskunft. Die die Nutzeinrichtungen betätigende Arbeitshydraulik wird dort durch Umschalten eines Umschaltventiles rein hydraulisch an eine Verstellpumpe angeschlossen, die Teil der hydrostatisch-mechanischen Antriebseinrichtung des Fahrzeuges ist. Eine solche rein hydraulische Anbindung hat jedoch gewisse Nachteile, die hier nicht näher erläutert werden müssen.

Bei Fahrzeugen der gattungsgemäßen Art besteht der Hauptantriebsstrang aus einem Antriebsmotor, einem hydrostatisch-mechanischen Getriebe als Kennungswandler und einer angetriebenen Achse. Es ist dabei in Verbindung mit solchen Hauptantriebssträngen schon bekannt geworden, einen Nebenabtriebsstrang vorzusehen, der aus derselben Antriebsmaschine, einem Verzweigungsgetriebe und über eine Kupplung zuschaltbaren Nebenaggregaten, z.B. eine oder mehreren Pumpen, zur Versorgung der Nutzeinrichtungen des Fahrzeuges besteht. Dies hat insofern Nachteile, weil die Antriebsmaschine leistungsmäßig auf den Bedarf für Fahrbetrieb des Fahrzeugs ausgelegt ist. Die Leistungsanforderungen der Nebenaggregate zur Versorgung der Nutzeinrichtungen sind in der Regel jedoch wesentlich geringer, so daß sich ein sehr ungünstiger Betriebspunkt im Kennfeld der Antriebsmaschine ergibt. Dieser Betrieb der Antriebsmaschine im unteren Teillastbereich bewirkt, wie an sich bekannt, einen relativ hohen Kraftstoffverbrauch und einen hohen Schadstoffausstoß. Im übrigen sind bekannte Lösungen wegen des entsprechenden Aufwandes für den Nebenabtrieb verhältnismäßig teuer; außerdem benötigt der Nebenabtrieb einen nicht unbeträchtlichen Raum und entsprechende Anpassungen sowohl auf der Motorseite als auch der Getriebeseite.

Es ist daher Aufgabe der Erfindung, für ein stark instationär betriebenes Nutzfahrzeug der eingangs genannten Art ein Antriebskonzept zu schaffen, mit dem sowohl der Fahrantrieb des Fahrzeuges mit zufriedenstellenden Kraftstoffverbrauchs und Schadstoffemissionswerten und auch bei niedrigen Drehzahlen ein leistungsgeringer Antrieb der Nebenaggregate der Nutzeinrichtungen möglich ist.

Diese Aufgabe ist erfindungsgemäß durch das im Kennzeichen des Anspruchs 1 angegebene Getriebe- und Antriebskonzept gelöst. Vorteilhafte Ausgestaltungen bzw. Weiterbildungen dieser Lösung sind in den Unteranspüchen gekennzeichnet.

Die Erfindung besteht dabei darin, daß ein spezielles hydrostatisch-mechanisches Leistungsverzweigungsgetriebe verwendet wird, das in mindestens zwei Arbeitsbereichen betreibbar ist und mindestens zwei Hydrowandler hat. Einer derselben ist zumindest im Anfahrbereich des Fahrzeuges an eine Abtriebswelle angeschlossen und steht bei Fahrzeugstillstand ebenfalls still, während ein zweiter Hydrowandler an eine von der Getriebeeingangs- und -ausgangswelle verschiedene Welle angeschlossen ist, mit der die die Pumpe(n) der Arbeitshydraulik antreibende Welle über eine Kupplung verbindbar ist. Außerdem ist eine Vorrichtung vorgesehen, mit der die Drehzahl der Getriebeausgangswelle erfaßbar und an eine Steuereinrichtung meldbar ist. Letztere wirkt auf eine Betätigungseinrichtung für die besagte Kupplung in der Weise ein, daß letztere nur bei Stillstand des Fahrzeuges oder Geschwindigkeiten unter 10 km/h für einen Antrieb der Pumpenwelle geschlossen wird.

Auf diese Weise sind die aufgabengemäßen Forderungen optimal erfüllt.

Nachstehend sind die Erfindung und deren Vorteile anhand zweier in der Zeichnung dargestellter Ausführungsbeispiele näher erläutert. In der Zeichnung zeigen:

Fig. 1 weitgehend schematisiert eine erste Ausführungsform eines Antriebskonzeptes für ein stark instationär betriebenes Nutzfahrzeug,

Fig. 2 ein zweites Antriebskonzept für ein stark instationär betriebenes Nutzfahrzeug.

In den Figuren sind gleiche bzw. einander entsprechende Bauteile mit gleichen Bezugszeichen angezogen.

In der Zeichnung sind mit (1) ein Antriebsmotor, insbesondere Dieselmotor, mit (2) ein als Kennungswandler dienendes Getriebe und mit (3) eine Antriebsachse eines stark instationär betriebenen Nutzfahrzeuges bezeichnet. Bei letzterem kann es sich beispielsweise um ein Müllsammelfahrzeug, einen Gabelstapler, einen Radlader, einen Bagger oder dergleichen handeln. Dieses Nutzfahrzeug verfügt über in den Figuren insgesamt mit (4) bezeichnete Nutzeinrichtungen, bei denen es sich um über eine Arbeitshydraulik betätigbare Huborgane, Pressorgane, Bagger- oder Radladerschaufeln oder dergleichen handelt. Als Teil der Arbeitshydraulik sind eine oder mehrere Pumpen (5, 6) für die Bereitstellung des nötigen Arbeitsdruckes an Nebenaggregaten (7) vorhanden, durch die besagte Nutzeinrichtungen (4) betätigbar sind. Dabei handelt es sich um Hub-, Druck- oder Kippzylinder oder andere Kolbeneinheiten.

Das Getriebe (2) ist durch ein vierwelliges hydromechanisches Leistungsverzweigungsgetriebe gebildet, das mindestens zwei Arbeitsbereiche und zwei Hydrowandler (8, 9) aufweist. Derartige Getriebe sind bisher vorwiegend in Verbindung mit Linienbussen bekannt geworden. Dabei ist eine mit dem Antriebsmotor (1) verbundene Eingangswelle mit (10) und eine Ausgangswelle mit (11) bezeichnet, die mit dem Achsantriebsstrang (12) in Verbindung steht. Das Planetendifferentialgetriebe (2) umfaßt des weiteren ein großes, fest mit der Eingangswelle (10) verbundenes Sonnenrad (13), ein kleines Sonnenrad (14), mehrere, jeweils auf einer Hohlwelle sitzende Doppelplanetenräder (15, 16), einen mit der Ausgangswelle (11) fest verbundenen Steg (17) und ein Hohlrad (18), letzteres trägt eine Innenverzahnung, mit der die Planetenräder (16) kämmen. Das kleine Sonnenrad (14) ist drehfest mit einer Hohlwelle (19) verbunden, die auf der Eingangswelle (10) gelagert ist und außerdem ein Zahnrad (20) trägt. Drehfest mit dem Hohlrad (18) ist ein Zahnrad (21) verbunden, das mit einem drehfest auf einer Welle (22) sitzenden Zahnrad (23) kämmt. Die Welle (22) stellt die mechanische Verbindung zum Hydrowandler (8) her. Der Hydrowandler (8) kann ebenso wie der Hydrowandler (9) in beiden Richtungen sowohl als Motor als auch als Pumpe betrieben werden und ist mit letzterem über hydraulische Verbindungsleitungen (24, 25) verbunden. Das auf der Hohlwelle (19) sitzende Zahnrad (20) kämmt mit einem drehbar auf einer Welle (26) angeordneten Zahnrad (27). Die Welle (26) stellt die mechanische Verbindung zwischen dem Hydrowandler (9) und dem Planetendifferentialgetriebe (2) her. Außerdem ist auf der Welle (26) ein weiteres Zahnrad (28) drehbar angeordnet, das mit einem fest am Steg (17) angeordneten Zahnrad (29) in Eingriff steht. Mit (30) ist eine Wechselschaltkupplung bezeichnet, unter Zuhilfenahme derselben in der einen Schaltstellung das Zahnrad (28) mit der Welle (26) oder in der anderen Schaltstellung das andere Zahnrad (27) mit der Welle (26) drehfest gekoppelt werden kann. Zwischen beiden Schaltstellungen kann die Wechselschaltkupplung (30) eine Nullstellung einnehmen, in der keines der beiden Zahnräder (27) bzw. (28) mit der Welle (26) verbunden ist.

Die Drehzahl der Getriebeausgangswelle (11) summiert sich aus den Drehzahlen des großen Sonnenrades (13) und des Hohlrades (18), die die Umlaufgeschwindigkeit der Planetenräder (15, 16) bzw. des Steges (17) festlegen. Der Hydrowandler (8) bewirkt durch seine Drehzahl und Drehrichtung über die Zahnräder (23) und (21) Drehzahl und Drehrichtung des Hohlrades (18).

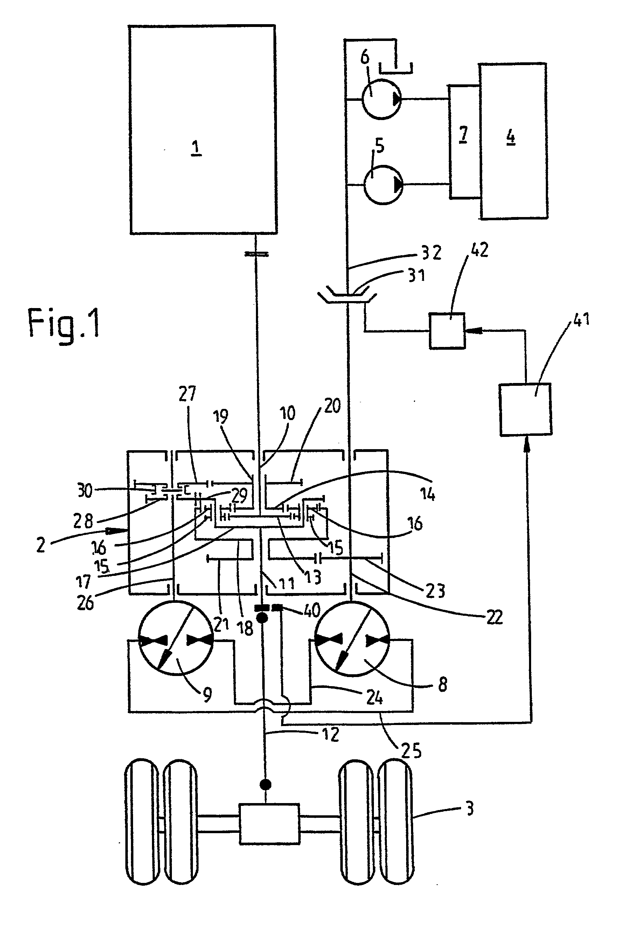

In Verbindung mit dem Ausführungsbeispiel gemäß Fig. 1 ergibt sich dabei folgende Wirkungsweise:

Für den Fall, daß das Fahrzeug beschleunigt werden soll, arbeitet der Hydrowandler (8) in einem ersten Arbeitsbereich des Leistungsverzweigungsgetriebes (2) ($\eta_{Ausgang}$ : $\eta_{Eingang}$ ≦ 50%) bei einer Drehrichtung des Hohlrades (18) umgekehrt zur Drehrichtung des großen Sonnenrades (13) als Pumpe und liefert diese umgesetzte Leistung über die Leitungen (24, 25) an den Hydrowandler (9). Dieser arbeitet dann als Motor und treibt die Welle (26) an. Die Wechselschaltkupplung (30) befindet sich dabei in einer Schaltstellung, in der das Zahnrad (28) mit der Welle (28) gekuppelt und damit die Getriebeverbindung über das Zahnrad (29) und den Steg (17) für Leistungsübertragung an die Getriebeausgangswelle (11) geschlossen ist.

In einem zweiten Arbeitsbereich ($\eta_{Ausgang}$ : $\eta_{Eingang}$ ≧ 50%) arbeitet bei gleicher Drehrichtung des Hohlrades (18) und des Sonnenrades (13) der Hydrowandler (8) als Motor. Dieser erhält dabei über die Leitungen (24, 25) seine Leistung vom Hydrowandler (9) zugeführt, der in diesem Bereich als Pumpe arbeitet. Die Wechselschaltkupplung (30) befindet sich dabei in einer Schaltstellung, in der das Zahnrad (27) mit der Welle (26) gekuppelt ist. Der Hydrowandler (9) erhält in diesem Fall Antriebsleistung also über die Doppelplanetenräder (15, 16) und die Hohlwelle (19) mit den Zahnrädern (14, 20) vom großen Sonnenrad (13) her zugeführt.

Wenn der Hydrowandler (8) stillsteht, dann wird praktisch die gesamte Leistung mechanisch vom Planetendifferential übertragen. In dieser Situation erfolgt die Umschaltung der Wechselschaltkupplung (30) vom Zahnrad (28) zum Zahnrad (27) hin bei steigender und vom Zahnrad (27) zum Zahnrad (28) hin bei sinkender Drehzahl der Getriebeausgangswelle (11).

Wenn das Fahrzeug stillsteht, dann steht auch der Hydrowandler (9) still. In diesem Fall dreht der Hydrowandler (8) propoitional mit der Drehzahl des Antriebsmotors (1). Dieser Aspekt wurde für die erfindungsgemäße Lösung ausgenutzt. Denn, wenn in diesem Zustand die Nutzeinrichtungen (4) des Fahrzeugs in Gang gesetzt werden sollen, so geschieht dies im erfindungsgemäßen Fall über eine schaltbare Kupplung (31) durch Ankuppeln der entsprechend verlängerten Welle (22) an die Antriebswelle (32) der Pumpen (5, 6). Letztere liefern dann Leistung an die hydraulischen Nebenaggregate (7). Die vom Antriebsmotor (1) für den Betrieb der Nutzeinrichtungen (4) dann aufzubringende Leistung ist vergleichsweise gering und auch im niedrigen Drehzahlbereich ausreichend vorhanden.

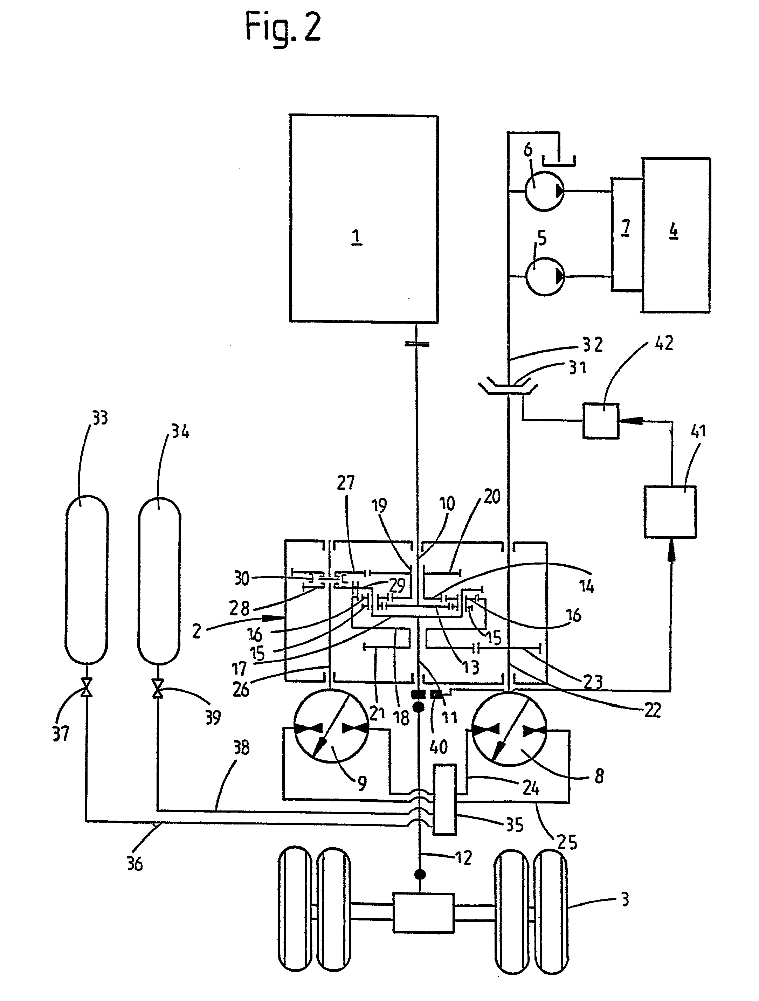

Das in Fig. 2 dargestellte Fahrzeug unterscheidet sich hinsichtlich der zu betrachtenden Aggregate von jenem nach Fig. 1 lediglich darin, daß dort dem hydromechanischen Leistungsverzweigungsgetriebe (2) zur Bildung einer Bremsenergierückgewinnungseinrichtung verschiedene Teile zugeordnet sind. Eine solche Bremsenergierückgewinnungseinrichtung ist bislang auch nur in Verbindung mit städtischen Linienbussen bekannt geworden. Im einzelnen handelt es sich bei den besagten Teilen um einen Hochdruckhydrospeicher (33), einen Niederdruckhydrospeicher (34), eine Steuereinrichtung (35), eine zum Hochdruckhydrospeicher (33) hinführende und von letzterer abzweigende Zuleitung (36) mit steuerbarem Absperrventil (37) und eine zum Niederdruckhydrospeicher (34) hinführende, von der Steuereinrichtung (35) abzweigende Zuleitung (38) mit eingeschaltetem steuerbarem Absperrventil (39). Diese Einrichtungen sind in ihrer gegenseitigen Zuordnung und Funktion in Verbindung mit Stadtlinienbussen, was die Ladung des Hochdruckhydrospeichers (33) beim Bremsen und Entladen des Hochdruckhydrospeichers (33) beim Anfahren des Fahrzeuges anbelangt bekannt.

Für den Betrieb der Nutzeinrichtungen (4) des Fahrzeugs bringt das Vorsehen der Bremsenergierückgewinnungseinrichtung den zusätzlichen Vorteil, daß die Arbeitshydraulik der Nutzeinrichtungen (4) Leistung nicht nur vom Antriebsmotor (1) her, sondern auch vom Hochdruckhydrospeicher (33) her bekommen kann, sofern dieser entsprechend aufgeladen ist. Ist dies der Fall, dann kann vom Hochdruckhydrospeicher (33) Leistung durch entsprechende Entladung an den Hydrowandler (8) abgegeben werden, der dann als Motor betrieben diese zugeführte Leistung an die Welle (22) und über diese bei geschlossener Kupplung (31) an die Welle (32) für den Antrieb der Pumpen (5, 6) abgibt. Erst wenn die Entladung einen Grad erreicht, der für den Antrieb der Pumpen (5, 6) nicht mehr ausreicht, dann erhalten die Pumpen (5, 6) ihre Antriebsleistung wieder so, wie im diesbezüglichen Fall gemäß Fig. 1 geschildert, vom Antriebsmotor (1) her.

Um ein unbeabsichtigtes Zugangsetzen der Nutzeinrichtungen (4) zu verhindern, kann eine Vorrichtung (40) vorgesehen sein, die die Drehzahl der Getriebeausgangswelle (11) erfaßt und an eine Steuereinrichtung (41) meldet. Diese ist so ausgelegt, daß von ihr ein Befehl für ein Schließen der Kupplung (31) an die auf diese einwirkende Betätigungseinrichtung (42) nur dann abgegeben wird, wenn das Fahrzeug stillsteht oder nur mit einer Geschwindigkeit unter 10 km/h betrieben wird.

## Patentansprüche

1. Stark instationär betriebenes Nutzfahrzeug mit über eine Arbeitshydraulik betätigbaren Nutzeinrichtungen, wie Müllsammelfahrzeug, Gabelstapler, Radlader, Bagger und dergleichen, mit einem Antriebsmotor, einem hydrostatisch-mechanischen Getriebe mit mindestens zwei Hydrowandlern und mit einem Nebenabtrieb, bei dem eine Pumpe(n) der Arbeitshydraulik antreibenden Welle von einem Hydrowandler aus antreibbar ist, dadurch gekennzeichnet, daß das hydrostatisch-mechanische Getriebe durch ein an sich bekanntes vierwelliges Leistungsverzweigungsgetriebe (2) mit mindestens zwei Arbeitsbereichen und mindestens zwei Hydrowandlern (8, 9) gebildet ist, wobei ein Hydrowandler (9) zumindest im Anfahrbereich des Fahrzeugs an eine Abtriebswelle (11) angeschlossen ist und bei Fahrzeug-Stillstand ebenfalls stillsteht, während ein zweiter Hydrowandler (8) an eine von der Getriebeeingangswelle (10) und Getriebeausgangswelle (11) verschiedene Welle (22) angeschlossen ist, mit der die die Pumpe(n) (5, 6) der Arbeitshydraulik antreibenden Welle (32) über eine Kupplung (31) verbindbar ist, und daß eine Vorrichtung (41) vorgesehen ist, mit der die Drehzahl der Getriebeausgangswelle (11) erfaßbar und an eine Steuereinrichtung (40) meldbar ist, die auf eine Betätigungseinrichtung (42) für die Kupplung (31) in der Weise einwirkt, daß letztere nur bei Stillstand des Fahrzeugs oder Geschwindigkeiten unter 10 km/h für einen Antrieb der Pumpenwelle (32) geschlossen wird.

2. Nutzfahrzeug nach Anspruch 1, dadurch gekennzeichnet, daß dem hydromechanischen Leistungsverzweigungsgetriebe (2) in an sich bekannter Weise als Teile einer Bremsenergierückgewinnungseinrichtung ein Hochdruckhydrospeicher (33), ein Niederdruckhydrospeicher (34) und eine Steuereinrichtung (35) sowie Zuleitungen (36, 38) von letzterer zu den Speichern (33, 34) mit eingeschalteten steuerbaren Absperrventilen (37, 39) zugeordnet sind, und daß die Arbeitshydraulik des Fahrzeugs über den Hydrowandler (8) entweder vom Hochdruckhydrospeicher (33) aus durch Entladung desselben oder vom Antriebsmotor (1) des Fahrzeugs antreibbar ist.

3. Nutzfahrzeug nach einem der vorhergehenden Ansprüche, dadurch gekennzeichnet, daß die Welle (22) des zweiten Hydrowandlers (8), die mit der die Pumpe(n) (5, 6) der Arbeitshydraulik antreibenden Welle (32) über die Kupplung (31) verbindbar ist, sich bei Fahrzeugstillstand proportional zur Drehzahl des Antriebsmotors (1) dreht.

## Revendications

1. Véhicule utilitaire à régime très variable avec des dispositifs de travail commandés hydrauliquement, tel que véhicule de ramassage des ordures ménagères, chariot élévateur à fourches, chargeur à roues, excavateur ou engin similaire, avec un moteur de commande, un mouvement hydraulique-mécanique avec au moins deux transformateurs hydrauliques et avec une prise de force auxiliaire, par laquelle un arbre commandant une ou des pompes (5) du système hydraulique de travail peut être commandé à partir d'un transformateur hydraulique, caractérisé en ce que le mouvement hydrostatique-mécanique est constitué par un mécanisme de branchement de couple (2) à quatre arbres, connu en soi, avec au moins deux zones de travail et au moins deux transformateurs hydrauliques (8, 9), dans lequel un transformateur hydraulique (9) est relié au moins dans la zone de mise en route du véhicule à un arbre de sortie (11) et est hors service également à l'arrêt du véhicule, alors qu'un deuxième transformateur hydraulique (8) est branché sur un arbre (22) distinct de l'arbre d'entrée du mouvement (10) et de l'arbre de sortie du mouvement (11), et avec lequel l'arbre (32) commandant la/les pompe(s) (5, 6) de l'hydraulique de travail peut être relié par un embrayage (31), et en ce qu'un dispositif (41) est prévu, avec lequel le régime de l'arbre de sortie de mouvement (11) est détectable et peut être transmis à un dispositif de commande (40), qui agit sur un dispositif actionnant l'embrayage (31) de façon, que ce dernier ne soit fermé seulement qu'à l'arrêt du véhicule ou pour des vitesses inférieures à 10 Km/h, pour entraîner l'arbre de pompe (32).

2. Véhicule utilitaire selon la revendication 1, caractérisé en ce que, au mécanisme de changement de couple hydromécanique (2), d'une façon connue en soi, comme partie d'un dispositif de récupération d'énergie de freinage sont associés un réservoir hydraulique haute pression (33), un réservoir hydraulique basse pression (34) et un dispositif de commande (35) ainsi que des canalisations (36, 38) depuis ce dernier, jusqu'aux réservoirs (33, 34) avec des vannes d'isolement (37, 39) intercalées et commandables, et en ce que l'hydraulique de travail du véhicule peut être commandée par le transformateur hydraulique (8) ou à partir du réservoir hydraulique haute pression (33) par décharge de celui-ci ou bien par le moteur de commande (1) du véhicule.

3. Véhicule utilitaire selon l'une quelconque des revendications précédentes, caractérisé en ce que l'arbre (22) du deuxième transformateur hydraulique (8) qui peut être relié avec l'arbre (32) commandant la/les pompe(s) (5, 6) de l'hydraulique de travail par l'intermédiaire de l'embrayage (31), tourne à l'arrêt du véhicule proportionnellement au régime du moteur de commande (1).

**Claims**

1. A commercial vehicle adapted to be operated with frequent starts and stops, and having equipment arranged to be operated by a hydraulic power system, such as a rubbish collecting vehicle, a fork lift truck, a wheeled loader, an excavator and the like, comprising a drive prime mover, a hydrostatic-mechanical transmission with at least two hydrostatic machines and with an auxiliary drive output, in the case of which a shaft driving one or more pumps of the hydraulic power system is able to be driven by a hydrostatic machine, characterized in that the hydrostatic-mechanical transmission is constituted by a known four-shaft power splitting transmission (2) with at least two operational ranges and at least two hydrostatic machines (8 and 9), one hydrostatic machine (9) being connected with one power output shaft (11) at least in the starting stage of vehicle operation, and when the vehicle is stationary is also stationary, whereas a second hydrostatic machine (8) is connected with a shaft (22), other than the transmission input shaft (10) and the transmission output shaft (11), by which shaft (22) the shaft (32) driving the pump or pumps (5 and 6) of the hydraulic power system is able to be connected via a clutch (31), and in that a device (41) is present, by which the speed of rotation of the transmission output shaft (11) may be detected and supplied to a control device (40), which acts on an actuating device (42) for the clutch (31) in such a manner that the latter is only engaged when the vehicle is stationary or at speeds under 10 km/h for a drive of the pump shaft (32).

2. The commercial vehicle as claimed in claim 1, characterized in that for the hydromechanical power splitting transmission (2) there are provided in a known manner, as parts of a brake energy recovery device, a high pressure hydroaccumulator (33), a low pressure hydroaccumulator (34) and a control device (35) and also pipes (36 and 38) from the latter to the accumulators (33 and 34) with switched on controlled shutoff valves (37 and 39), and in that the hydraulic power system of the vehicle is able to be driven via the hydrostatic machine (8) either from the high pressure hydraulic accumulator (33) by discharge of same or from the drive prime mover (1) of the vehicle.

3. The commercial vehicle as claimed in any one of the preceding claims, characterized in that the shaft (22) of the second hydrostatic machine (8), which is able to be connected via the clutch (31) with the shaft (32), driving the pump or pumps (5 and 6) of the hydraulic power system, rotates at a rate proportional to the speed of rotation of the drive prime mover (1) when the vehicle is stationary.

Fig.1

EP 0 249 001 B1

# Fig. 2